# EUROPEAN PATENT SPECIFICATION

(11) **EP 2 595 219 B1**
(45) Date of publication and mention of the grant of the patent: **15.04.2015**
(21) Application number: 12192152.2
(22) Date of filing: 12.11.2012
(51) Int. Cl.: H01M 2/22, H01M 2/26, H01M 4/78, H01M 10/0525, B21D 11/14

(54) **Current collector, energy storage element, and method of manufacturing current collector**
Stromsammler, Energiespeicherelement und Verfahren zur Herstellung des Stromkollektors
Collecteur de courant, élément de stockage d'énergie et procédé de fabrication de collecteur de courant

(30) Priority: 17.11.2011 JP 2011251715; 16.10.2012 JP 2012228949
(43) Date of publication of application: 22.05.2013
(73) Proprietor: GS Yuasa International Ltd., Kisshoin, Minami-ku, Kyoto-shi, Kyoto 601-8520 (JP)
(72) Inventor: Masuda, Hideki, Kyoto-shi, Kyoto 601-8520 (JP); Tsuruta, Shogo, Kyoto-shi, Kyoto 601-8520 (JP)
(74) Representative: Grünecker Patent- und Rechtsanwälte PartG mbB

(56) References cited:
- EP-A1- 2 287 942
- EP-A2- 2 463 935
- US-A1- 2011 244 281

## Description

### Cross reference to Related Applications

The present application is based on and claims priority of Japanese Patent Application No. 2011-251715 filed on November 17, 2011 and Japanese Patent Application No. 2012-228949 filed on October 16, 2012. The entire disclosure of the above-identified application, including the specification, drawings and claims is incorporated herein by reference in its entirety.

### Field

The present invention relates to a current collector employed in an energy storage element such as a lithium ion battery, a method of manufacturing the current collector, and the energy storage element that includes the current collector.

### Background

Recently, various energy storage elements such as lithium ion batteries have come to be widely employed in power-assisted bicycles, as well as in hybrid vehicles and electric vehicles being developed as substitutes for gasoline vehicles, as one of measures for global environmental issues. The energy storage elements include current collectors for electrical connection between a positive electrode of an electrode assembly and a positive electrode terminal, or between a negative electrode of the electrode assembly and a negative electrode terminal.

The current collectors thus far developed include, for example as disclosed in Patent Literature 1, one that includes a pair of electrode connecting portions of a slender shape, to be connected to the positive electrode or the negative electrode of the electrode assembly. The pair of electrode connecting portions of the current collector are attached so as to hold therebetween the corner portions of the electrode assembly, thus to serve to prevent the corner portions of the electrode assembly from being damaged.

### Citation List

### Patent Literature

Patent Literature 1: Japanese Unexamined Patent Application Publication No. 2003-346903

### Summary

An object of the present invention is to provide a current collector that can be formed with a larger width between the pair of electrode connecting portions without an increase in area of the material and thus allows the material size to be reduced, a method of manufacturing such a current collector, and an energy storage element that includes the current collector.

In an aspect, the present invention provides a current collector including a terminal connecting portion; a first electrode connecting portion including a first surface extending forward and downward from a right frontal portion of the terminal connecting portion; a second electrode connecting portion including a second surface extending forward and downward from a left frontal portion of the terminal connecting portion and opposing the first surface; a first twisted portion having an end portion connected to the right frontal portion and the other end portion connected to an upper end portion of the first electrode connecting portion; and a second twisted portion having an end portion connected to the left frontal portion and the other end portion connected to an upper end portion of the second electrode connecting portion. A clearance between surfaces defined as a distance between the first surface and the second surface in a left-right direction is larger than a distance between the center of the right frontal portion in the left-right direction and the center of the left frontal portion in the left-right direction.

In the current collector thus configured, the distance in the left-right direction between the first surface of the first electrode connecting portion and the second surface of the second electrode connecting portion is larger than the distance between the the center of the right frontal portion of the terminal connecting portion in the left-right direction and the center of the left frontal portion of the terminal connecting portion in the left-right direction. In conventional current collectors, in contrast, the distance between the first surface and the second surface in the left-right direction is generally the same as the distance between the center of the right frontal portion in the left-right direction and the center of the left frontal portion in the left-right direction. Accordingly, the above-proposed current collector can be formed with a larger distance between the first surface and the second surface in the left-right direction compared with the conventional ones, and therefore a larger width between the pair of electrode connecting portions can be obtained from the material of the same size, which enables reduction in size of the material to be prepared.

Preferably, the clearance between surfaces may be larger than a distance between the right edge of the right frontal portion and the left edge of the left frontal portion in the left-right direction.

In this case, the distance in the left-right direction between the first surface of the first electrode connecting portion and the second surface of the second electrode connecting portion is larger than the distance in the left-right direction between the right edge of the right frontal portion of the terminal connecting portion and the left edge of the left frontal portion thereof. With such a configuration, the distance between the first surface and the second surface in the left-right direction can be made even larger, and therefore the distance between the pair of electrode connecting portions can be further increased despite using the material of the same size, which enables further reduction in size of the material to be prepared.

Preferably, the clearance between surfaces may be defined as a distance in the left-right direction between an upper end portion of the first surface and an upper end portion of the second surface. Alternatively, the clearance between surfaces may be defined as a minimum value of the distance between the first surface and the second surface in the left-right direction.

In the former case, the distance between the upper end portion of the first surface and the upper end portion of the second surface is larger than the distance between the center of the right frontal portion in the left-right direction and the center of the left frontal portion in the left-right direction, or larger than the distance between the right edge of the right frontal portion and the left edge of the left frontal portion. In the latter case, the minimum value of the distance between the respective surfaces, namely the first surface and the second surface, is larger than the distance between the center of the right frontal portion in the left-right direction and the center of the left frontal portion in the left-right direction, or larger than the distance between the respective edges, namely the right edge of the right frontal portion and the left edge of the left frontal portion. Thus, whereas the distance between the first surface and the second surface is not constant in the case where the pair of surfaces are not parallel to each other, the distance between the upper end portions of the respective surfaces, or the minimum value of the distance between those surfaces is made larger than the distance between the centers of the right and left frontal portions, or the distance between the respective edges thereof. With such a configuration, the distance between the first surface and the second surface in the left-right direction can be made even larger, and therefore the distance between the pair of electrode connecting portions can be further increased despite using the material of the same size, which enables further reduction in size of the material to be prepared. Further, the mentioned configuration eliminates the need to process the first electrode connecting portion and the second electrode connecting portion, which are the leg portions of the current collector, after forming the current collector by twisting.

Preferably, a length of the right frontal portion in the left-right direction may be generally the same as a length of the upper end portion of the first electrode connecting portion in a forward-backward direction, or a length of the left frontal portion in the left-right direction may be generally the same as a length of the upper end portion of the second electrode connecting portion in the forward-backward direction.

In this case, the length of the right frontal portion of the terminal connecting portion in the left-right direction is generally the same as the length of the upper end portion of the first electrode connecting portion in the forward-backward direction, or the length of the left frontal portion of the terminal connecting portion in the left-right direction is generally the same as the length of the upper end portion of the second electrode connecting portion in the forward-backward direction. In other words, the first electrode connecting portion and a first twisted portion, which is formed between the right frontal portion of the terminal connecting portion and the upper end portion of the first electrode connecting portion, are formed from a plate of the same width, or the second electrode connecting portion and a second twisted portion, which is formed between the left frontal portion of the terminal connecting portion and the upper end portion of the second electrode connecting portion, are formed from the plate of the same width. Forming thus the material of the first twisted portion and the first electrode connecting portion of the current collector in the same width, or the material of the second twisted portion and the second electrode connecting portion in the same width facilitates the processing of the material, and contributes to reducing the size of the material to be prepared.

Preferably, the first twisted portion may have a shape formed by twisting a flat plate in a plurality of stages, and may constitute an intermediate portion between the right frontal portion and the upper end portion of the first electrode connecting portion, or the second twisted portion may have a shape formed by twisting a flat plate in a plurality of stages, and may constitute an intermediate portion between the left frontal portion and the upper end portion of the second electrode connecting portion.

In this case, the first twisted portion has the shape formed by twisting a plate in a plurality of stages, and is located between the right frontal portion of the terminal connecting portion and the upper end portion of the first electrode connecting portion, or the second twisted portion has the shape formed by twisting a plate in a plurality of stages, and is located between the left frontal portion of the terminal connecting portion and the upper end portion of the second electrode connecting portion. Since the first twisted portion or the second twisted portion is formed by twisting a plate in a plurality of stages, the stress originating from the twisting process is dispersed, and therefore concentration of the stress at a specific position can be avoided.

The current collector may be provided in an energy storage element including an electrode assembly having a positive electrode and a negative electrode, and a positive electrode terminal and a negative electrode terminal located above the electrode assembly and, preferably, the terminal connecting portion may be located on the side of the positive electrode terminal or the negative electrode terminal and electrically connected to the positive electrode terminal or the negative electrode terminal, the first electrode connecting portion may be connected to the positive electrode or the negative electrode via the first surface, and the second electrode connecting portion may be connected to the positive electrode or the negative electrode via the second surface.

In this case, the first electrode connecting portion is connected to the positive electrode or negative electrode of the electrode assembly via the first surface, and the second electrode connecting portion is connected to the positive electrode or negative electrode of the electrode assembly via the second surface. In other words, the electrode assembly is placed bertween the first surface and the second surface. As described above, the current collector having a larger width between the first surface and the second surface can be obtained from the material of the same size. Therefore, the electrode assembly having a larger width can be placed between the first surface and the second surface, which leads to improved energy density of the energy storage element.

In another aspect, the present invention proviedes an energy storage element including an electrode assembly having a positive electrode and a negative electrode; a positive electrode terminal; a negative electrode terminal; and the current collector configured as above, electrically connecting at least one of between the positive electrode and the positive electrode terminal and between the negative electrode and the negative electrode terminal.

In still another aspect, the present invention provides a method of manufacturing a current collector, the current collector including a terminal connecting portion; a first electrode connecting portion including a first surface extending forward from a right frontal portion of the terminal connecting portion; and a second electrode connecting portion including a second surface extending forward from a left frontal portion of the terminal connecting portion. The method includes forming a first twisted portion having an end portion connected to the right frontal portion and the other end portion connected to an upper end portion of the first electrode connecting portion, by rotating and twisting downward the first electrode connecting portion with respect to the terminal connecting portion such that the first surface extends forward and downward from the right frontal portion; and forming a second twisted portion having an end portion connected to the left frontal portion and the other end portion connected to an upper end portion of the second electrode connecting portion, by rotating and twisting downward the second electrode connecting portion with respect to the terminal connecting portion such that the second surface extends forward and downward from the left frontal portion so as to oppose the first surface. The forming of the first twisted portion or the forming of the second twisted portion includes twisting the first electrode connecting portion or twisting the second electrode connecting portion such that a clearance between surfaces defined as a distance between the first surface and the second surface in the left-right direction becomes larger than a distance between the center of the right frontal portion in the left-right direction and the center of the left frontal portion in the left-right direction.

The method proposed above includes rotating and twisting downward the first electrode connecting portion with respect to the terminal connecting portion such that the first surface of the first electrode connecting portion extends forward and downward from the right frontal portion, and rotating and twisting downward the second electrode connecting portion with respect to the terminal connecting portion such that the second surface of the second electrode connecting portion extends forward and downward from the left frontal portion. In the twisting of the first electrode connecting portion or the second electrode connecting portion, the first electrode connecting portion or the second electrode connecting portion is twisted such that the distance between the first surface and the second surface in the left-right direction becomes larger than the distance between the center of the right frontal portion in the left-right direction and the center of the left frontal portion in the left-right direction. By conventional manufacturing methods of the current collector, in contrast, the first electrode connecting portion and the second electrode connecting portion are twisted such that the distance between the first surface and the second surface in the left-right direction becomes generally the same as the distance between the center of the right frontal portion in the left-right direction and the center of the left frontal portion in the left-right direction. Accordingly, the above-proposed manufacturing method enables the current collector to be formed with a larger distance between the first surface and the second surface in the left-right direction compared with the conventional methods, and therefore a larger width between the pair of electrode connecting portions can be obtained from the material of the same size, which enables reduction in size of the material to be prepared.

Preferably, the forming of the first twisted portion or the forming of the second twisted portion may include twisting the first electrode connecting portion or twisting the second electrode connecting portion such that the clearance between surfaces becomes larger than a distance between the right edge of the right frontal portion and the left edge of the left frontal portion in the left-right direction.

In this case, the twisting of the first electrode connecting portion or the twisting of the second electrode connecting portion is performed such that the distance in the left-right direction between the first surface of the first electrode connecting portion and the second surface of the second electrode connecting portion becomes larger than the distance between the right edge of the right frontal portion and the left edge of the left frontal portion in the left-right direction. With such a method, the distance between the first surface and the second surface in the left-right direction can be made even larger, and therefore the distance between the pair of electrode connecting portions can be further increased despite using the material of the same size, which enables further reduction in size of the material to be prepared.

Preferably, the forming of the first twisted portion or the forming of the second twisted portion may include twisting the first electrode connecting portion or twisting the second electrode connecting portion such that the clearance between surfaces becomes equal to a distance between an upper end portion of the first surface and an upper end portion of the second surface in the left-right direction. Alternatively, the forming of the first twisted portion or the forming of the second twisted portion may include twisting the first electrode connecting portion or twisting the second electrode connecting portion such that the clearance between surfaces becomes equal to a minimum value of the distance between the first surface and the second surface in the left-right direction.

In the former case, the first electrode connecting portion or the second electrode connecting portion is twisted such that the distance between the upper end portion of the first surface and the upper end portion of the second surface in the left-right direction becomes larger than the distance between the center of the right frontal portion in the left-right direction and the center of the left frontal portion in the left-right direction, or larger than the distance between the right edge of the right frontal portion and the left edge of the left frontal portion. In the latter case, the first electrode connecting portion or the second electrode connecting portion is twisted such that the minimum value of the distance between the respective surfaces, namely the first surface and the second surface, becomes larger than the distance between the center of the right frontal portion in the left-right direction and the center of the left frontal portion in the left-right direction, or larger than the distance between the respective edges, namely the right edge of the right frontal portion and the left edge of the left frontal portion. Thus, whereas the distance between the first surface and the second surface is not constant in the case where the pair of surfaces are not parallel to each other, the electrode connecting portions are twisted such that the distance between the upper end portions of the respective surfaces, or the minimum value of the distance between those surfaces becomes larger than the distance between the centers of the right and left frontal portions, or the distance between the respective edges thereof. With such a method, the distance between the first surface and the second surface in the left-right direction can be made even larger, and therefore the distance between the pair of electrode connecting portions can be further increased despite using the material of the same size, which enables further reduction in size of the material to be prepared. Further, the mentioned configuration eliminates the need to process the first electrode connecting portion and the second electrode connecting portion, which are the leg portions of the current collector, after forming the current collector by twisting.

### Brief Description of Drawings

These and other objects, advantages and features of the invention will become apparent from the following description thereof taken in conjunction with the accompanying drawings that illustrate a specific embodiment of the present invention.
[FIG. 1]

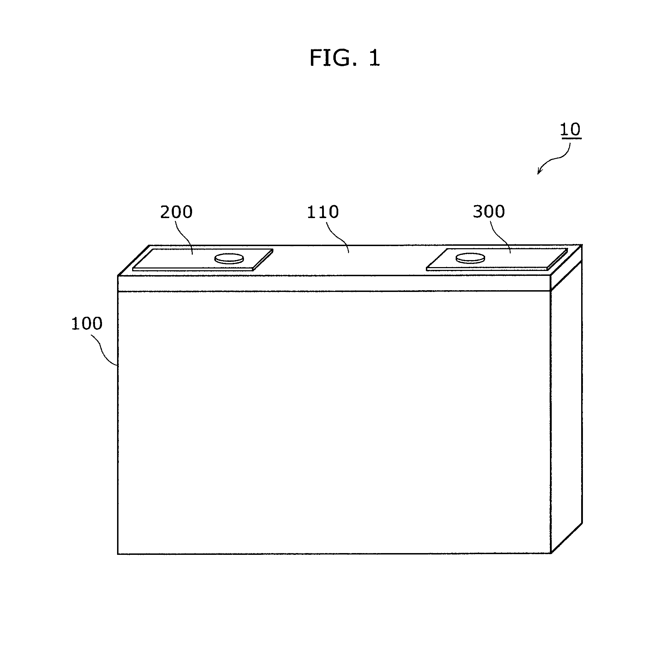

   FIG. 1 is a schematic perspective view showing an appearance of an energy storage element according to an embodiment of the present invention.
[FIG. 2]

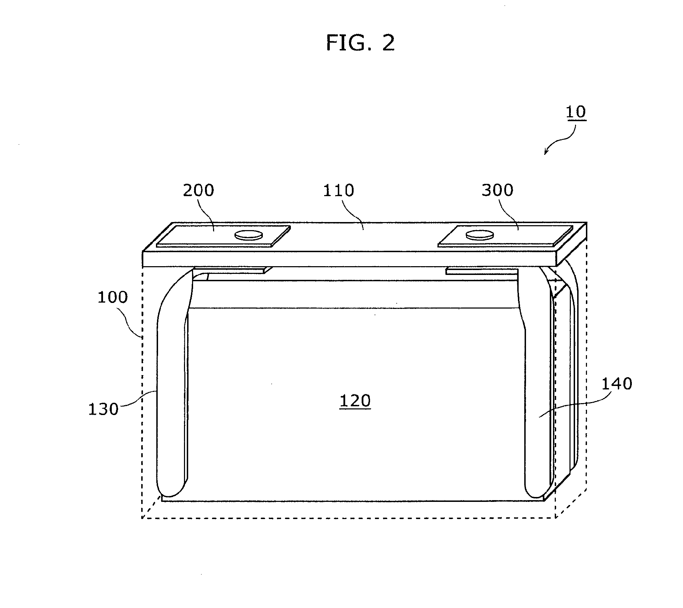

   FIG. 2 is a schematic see-through perspective view showing an internal structure of the energy storage element according to the embodiment.
[FIG. 3A]

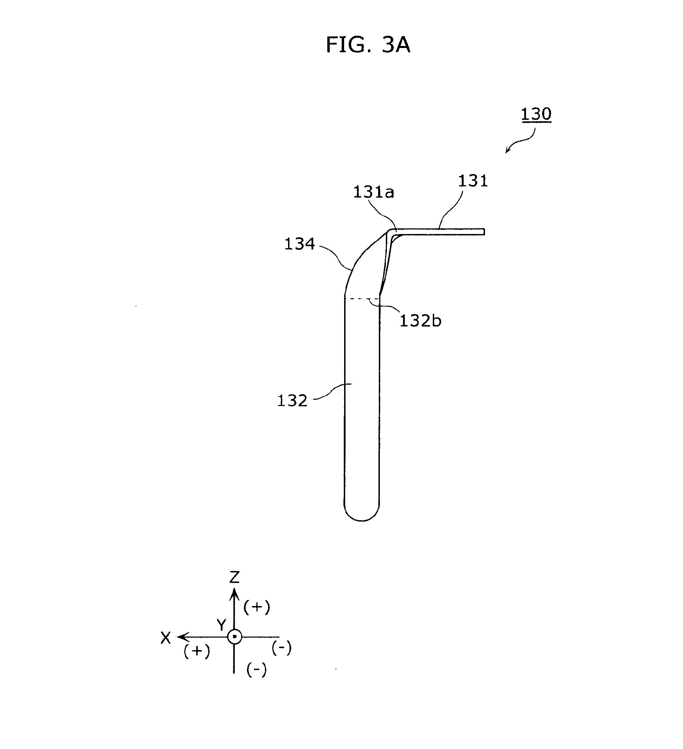

   FIG. 3A is a side view showing a configuration of a positive electrode current collector according to the embodiment.
[FIG. 3B]

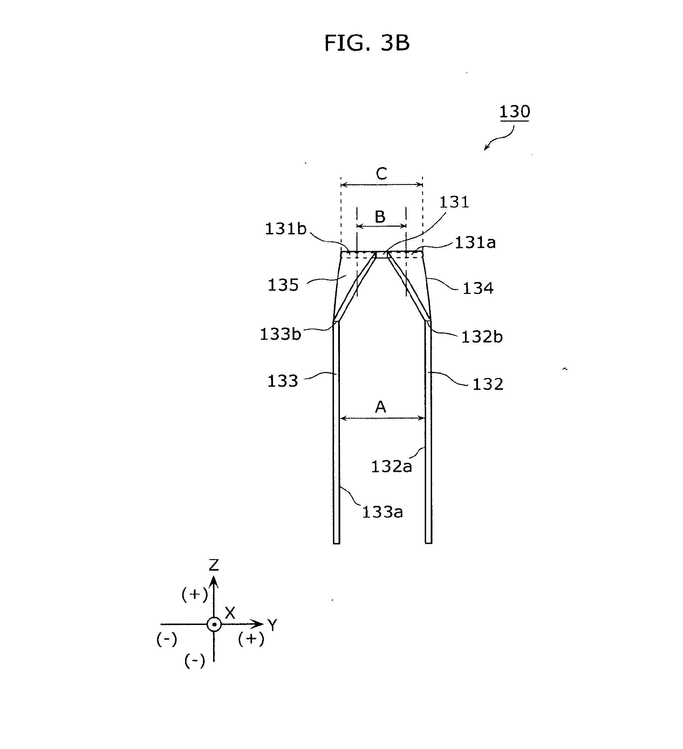

   FIG. 3B is a front view showing the configuration of the positive electrode current collector according to the embodiment.
[FIG. 3C]

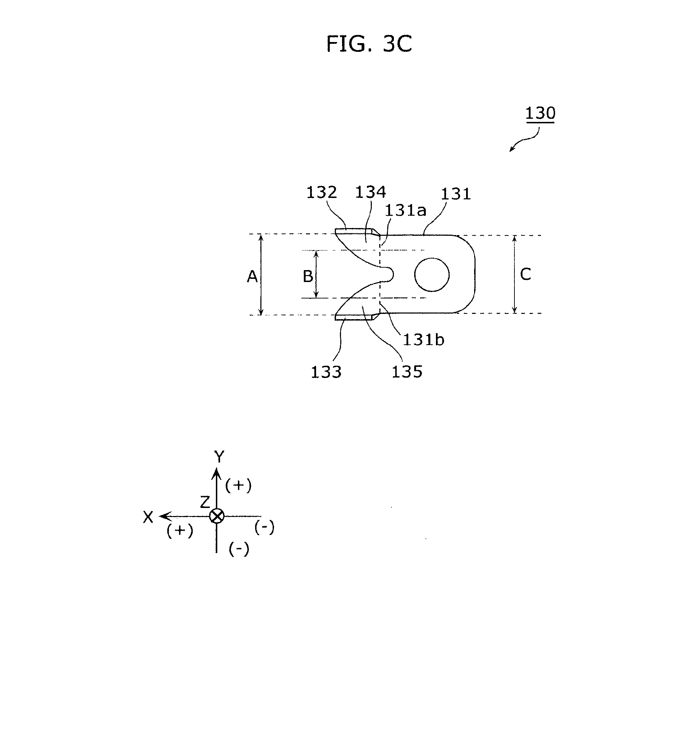

   FIG. 3C is a bottom plan view showing the configuration of the positive electrode current collector according to the embodiment.
[FIG. 4]

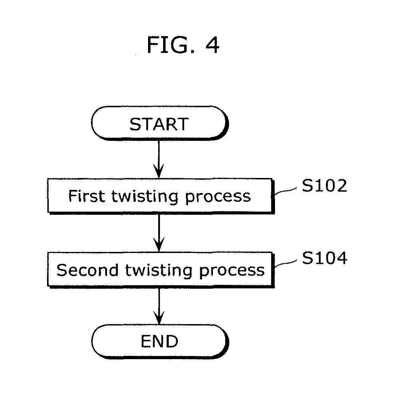

   FIG. 4 is a flowchart showing a manufacturing process of the positive electrode current collector according to the embodiment.
[FIG. 5A]

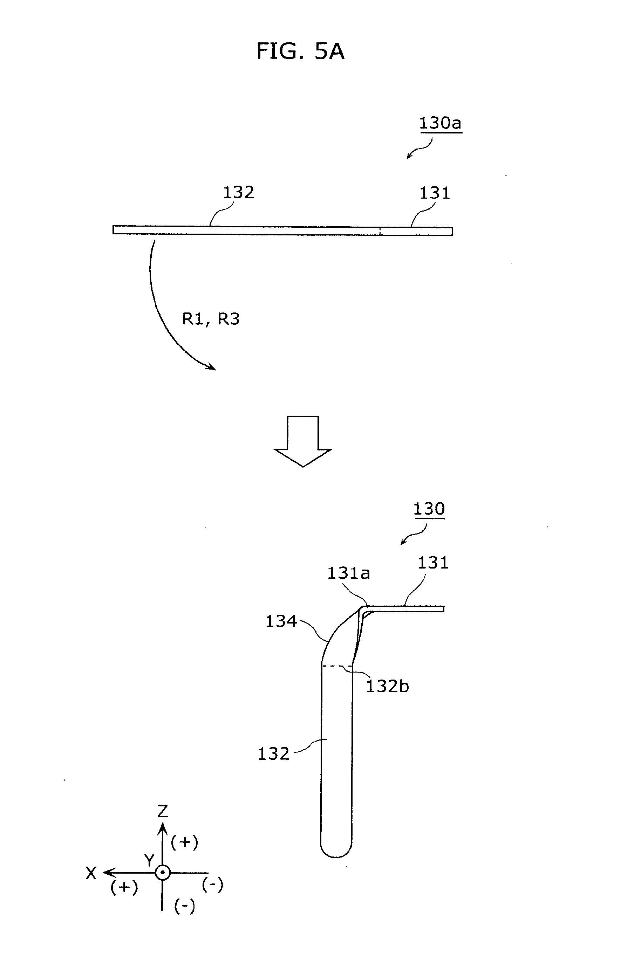

   FIG. 5A includes side views of the positive electrode current collector according to the embodiment, for explaining the manufacturing method thereof.
[FIG. 5B]

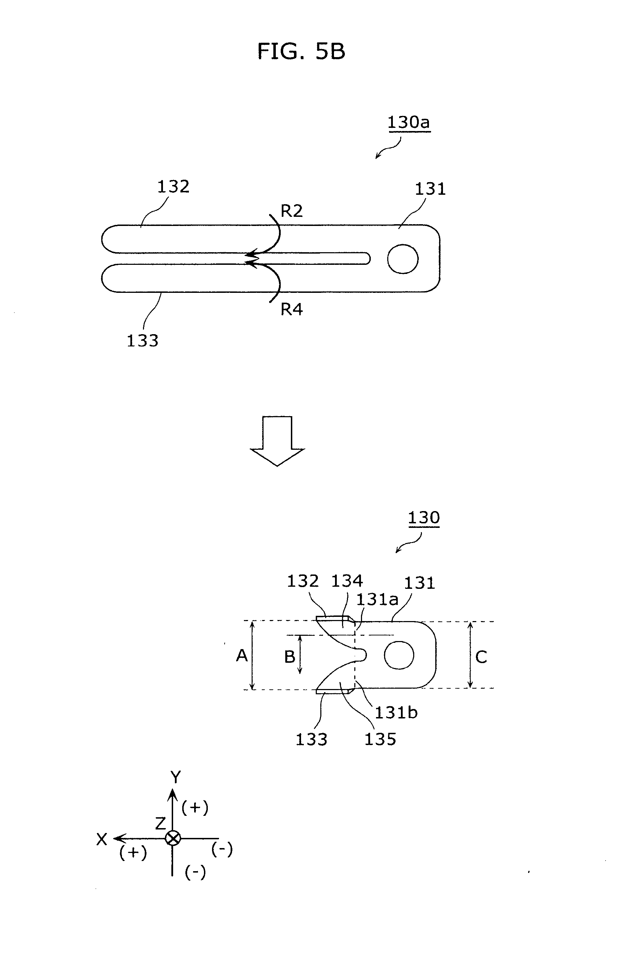

   FIG. 5B includes plan views of the positive electrode current collector according to the embodiment, for explaining the manufacturing method thereof.
[FIG. 5C]

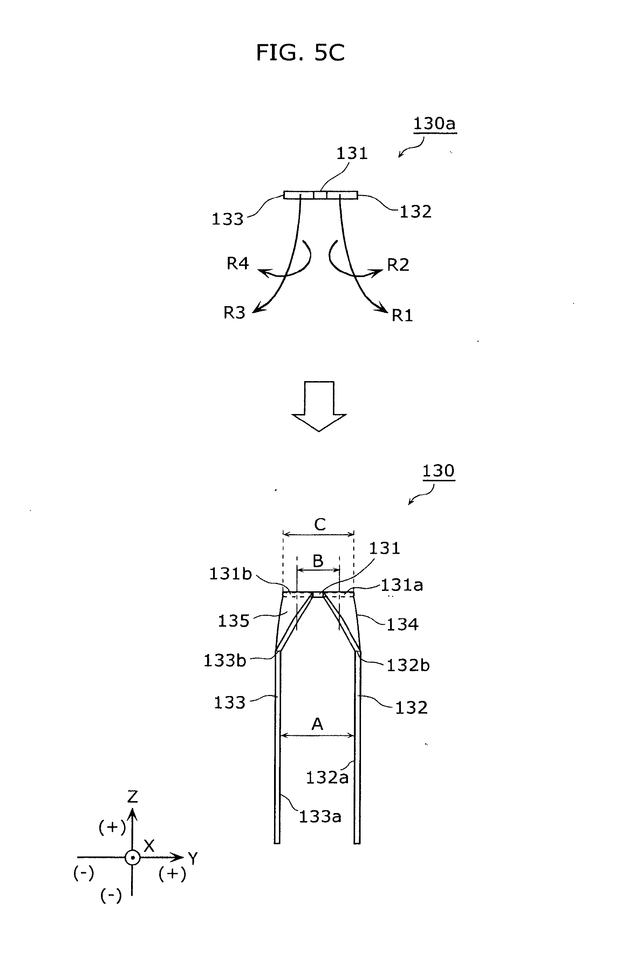

   FIG. 5C includes front views of the positive electrode current collector according to the embodiment, for explaining the manufacturing method thereof.
[FIG. 6]

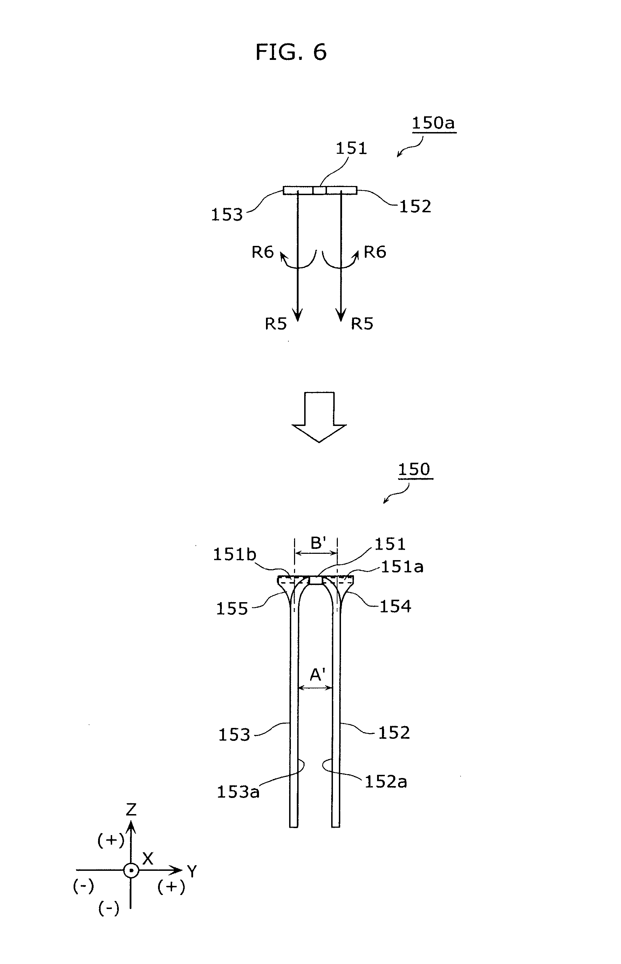

   FIG. 6 is a drawing for explaining the advantageous effect of the positive electrode current collector according to the embodiment.
[FIG. 7]

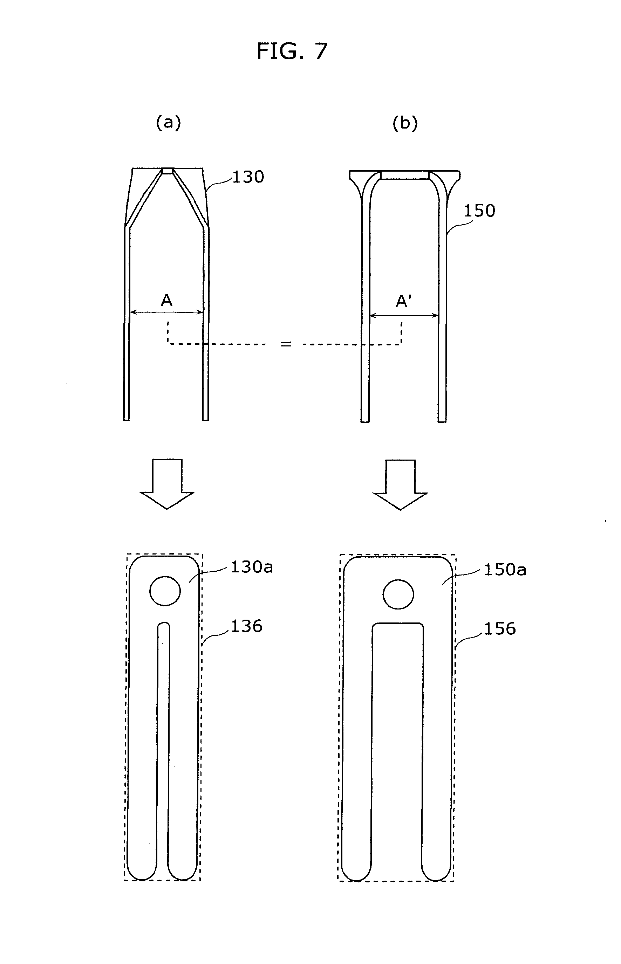

   FIG. 7 includes front views of the positive electrode current collector according to the embodiment, for explaining the advantageous effect thereof.
[FIG. 8A]

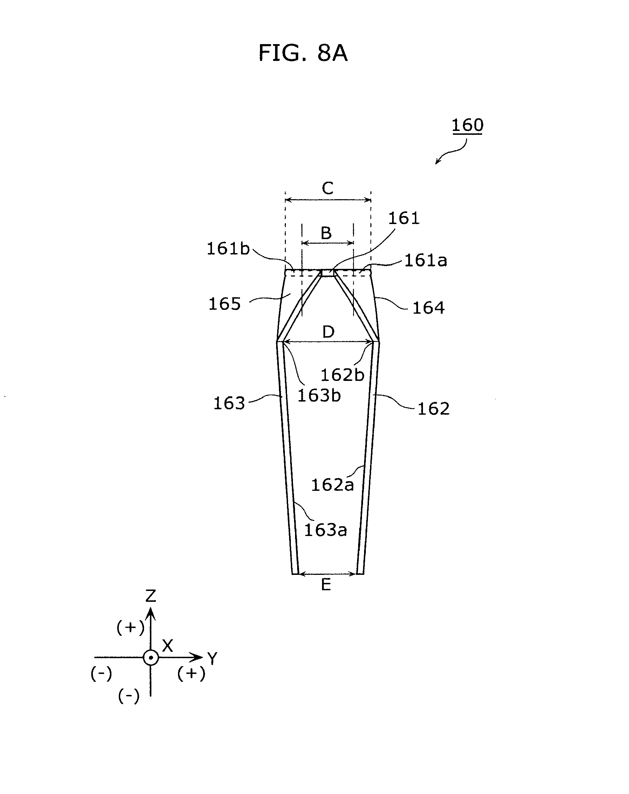

   FIG. 8A is a front view showing a configuration of a positive electrode current collector according to a variation of the embodiment.
[FIG. 8B]

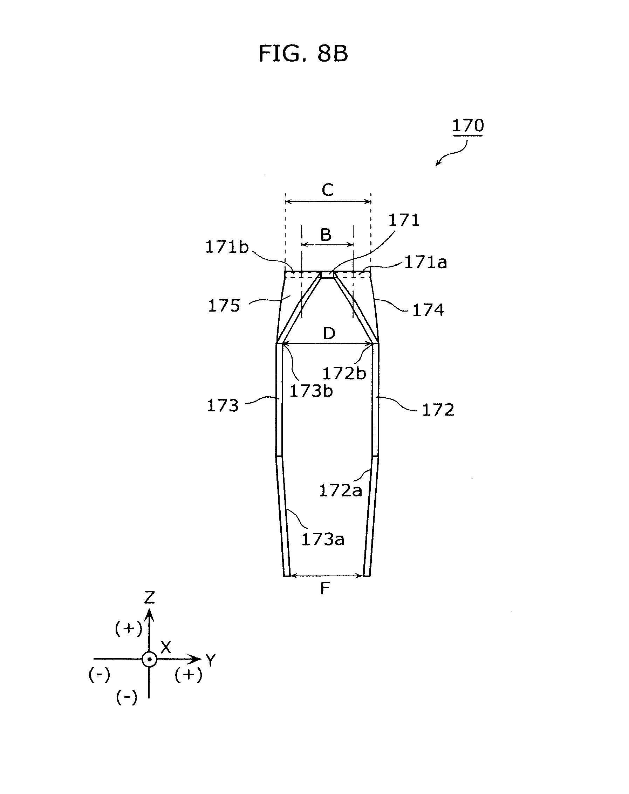

   FIG. 8B is a front view showing a configuration of a positive electrode current collector according to another variation of the embodiment.

### Description of Embodiment

A drawback of the conventional current collector is that the electrode connecting portions can only be formed in a fixed distance therebetween from a material of a certain size, and therefore a material of a larger size is necessary for an electrode assembly having a larger width between the corner portions.

In other words, in the case of the conventional current controller the width between the pair of electrode connecting portions obtained from the material of the same shape is fixed, and hence the material of the same size can only provide the electrode connecting portions of the fixed width. Accordingly, for the electrode assemblies having larger widths between the corner portions, the larger materials for the current collector that fit each of those widths are necessary.

The present invention has been accomplished in view of the foregoing problem, and provides a current collector that can be formed with a larger width between the pair of electrode connecting portions without an increase in area of the material and thus allows the material size to be reduced, a method of manufacturing such a current collector, and an energy storage element that includes the current collector.

Hereafter, a current collector according to an embodiment of the present invention will be described referring to the drawings. The embodiment described below represents a preferable example of the present invention. Numerical values, shapes, materials, constituents, positions thereof and relationship therebetween, methods, and sequences thereof cited in the following embodiment are only exemplary, and in no way intended to limit the present invention. The present invention is limited exclusively by the appended claims. Therefore, the constituents described in the embodiment but not set forth in independent claims representing the most superordinate concept of the present invention are to be construed as examples of the present invention that may achieve a more preferable form, though not mandatory for achieving the foregoing object of the present invention.

First, a configuration of an energy storage element 10 will be described.

FIG. 1 is a schematic perspective view showing an appearance of the energy storage element 10 according to the embodiment of the present invention.

FIG. 2 is a schematic see-through perspective view showing an internal structure of the energy storage element 10 according to the embodiment.

The energy storage element 10 is a secondary battery capable of charging and discharging electricity, and more particularly a nonaqueous electrolyte battery such as a lithium ion battery. Accordingly, the energy storage element 10 is a secondary battery the positive electrode of which is, for example, a lithium transition metal oxide such as lithium cobalt oxide, and the negative electrode of which is a carbon-based material. Here, the energy storage element 10 is not limited to the nonaqueous electrolyte battery, but may be a secondary battery other than the nonaqueous electrolyte battery, or a capacitor.

As shown in FIG. 1, the energy storage element 10 includes a container 100, a positive electrode terminal 200, and a negative electrode terminal 300, and the container 100 includes a cover plate 110 serving as an upper wall. As shown in FIG. 2, an electrode assembly 120, a positive electrode current collector 130, and a negative electrode current collector 140 are enclosed inside the container 100. Though not shown, the container 100 of the energy storage element 10 is loaded with liquid such as electrolyte solution.

The energy storage element 10 is a rectangular box-shaped member that accommodates therein the electrode assembly 120, the positive electrode current collector 130, and the negative electrode current collector 140, and covered with the cover plate 110 of a rectangular shape. Thus, the energy storage element 10 includes a bottomed main casing of a rectangular tubular shape made of a metal, and the cover plate 110 made of a metal covering the opening of the main casing. In addition, the cover plate 110 is coupled with the main casing by welding or the like after placing therein the electrode assembly 120 and so on, so that the energy storage element 10 constitutes a sealed enclosure.

The electrode assembly 120 includes a positive electrode, a negative electrode, and a separator so as to store electricity, though such details are not shown. The negative electrode is formed of a slender strip-shaped negative electrode current collector sheet made of copper, having a negative electrode active material layer formed on the surface thereof. The positive electrode is formed of a slender strip-shaped positive electrode current collector sheet made of aluminum, having a positive electrode active material layer formed on the surface thereof. The separator is a microporous sheet made of a resin. The electrode assembly 120 is constituted of a layered structure including the negative electrode and the positive electrode with the separator interleaved therebetween, the layered structure being rolled in the longitudinal direction so as to form an elliptical shape as a whole.

The positive electrode terminal 200 is an electrode terminal electrically connected to the positive electrode of the electrode assembly 120, and the negative electrode terminal 300 is an electrode terminal electrically connected to the negative electrode of the electrode assembly 120. The positive electrode terminal 200 and the negative electrode terminal 300 are electrode terminals made of a metal, and serve to deliver the electricity stored in the electrode assembly 120 to outside of the energy storage element 10, and to introduce electricity into inside the energy storage element 10 to thereby electrically charge the electrode assembly 120. The positive electrode terminal 200 and the negative electrode terminal 300 are attached to the cover plate 110 provided above the electrode assembly 120.

The positive electrode current collector 130 is a conductive and rigid member disposed between the positive electrode of the electrode assembly 120 and a sidewall of the container 100, and electrically connected to the positive electrode terminal 200 and the positive electrode of the electrode assembly 120. Accordingly, the positive electrode current collector 130 provides electrical connection between the positive electrode terminal 200 and the positive electrode of the electrode assembly 120. The positive electrode current collector 130 is made of aluminum, as is the positive electrode of the electrode assembly 120.

The negative electrode current collector 140 is a conductive and rigid member disposed between the negative electrode of the electrode assembly 120 and a sidewall of the container 100, and electrically connected to the negative electrode terminal 300 and the negative electrode of the electrode assembly 120. Accordingly, the negative electrode current collector 140 provides electrical connection between the negative electrode terminal 300 and the negative electrode of the electrode assembly 120. The negative electrode current collector 140 is made of copper, as is the negative electrode of the electrode assembly 120.

To be more detailed, the positive electrode current collector 130 and the negative electrode current collector 140 are members made of a metal, disposed so as to extend in a bent shape over a region corresponding to the sidewall of the container 100 and the cover plate 110, along the sidewall and the cover plate 110. The positive electrode current collector 130 and the negative electrode current collector 140 are respectively fixedly connected to the cover plate 110 by rivet crimping or the like.

The positive electrode current collector 130 and the negative electrode current collector 140 are fixedly connected to the positive electrode and the negative electrode of the electrode assembly 120, respectively, by welding or the like. More specifically, the positive electrode current collector 130 and the negative electrode current collector 140 are coupled with the positive electrode and the negative electrode of the electrode assembly 120 so as to grasp the positive electrode and the negative electrode. Accordingly, the electrode assembly 120 is suspended inside the container 100 from the cover plate 110, by the positive electrode current collector 130 and the negative electrode current collector 140.

Hereunder, the configuration of the positive electrode current collector 130 and the negative electrode current collector 140 will be described in further details. Since the positive electrode current collector 130 and the negative electrode current collector 140 have the same configuration, the following description only covers the positive electrode current collector 130, without particular reference to the negative electrode current collector 140.

FIGS. 3A to 3C illustrate the configuration of the positive electrode current collector 130 according to this embodiment. More particularly, FIG. 3A depicts the positive electrode current collector 130 shown in FIG. 2 viewed from the front, FIG. 3B depicts the same positive electrode current collector 130 viewed from the left, and FIG. 3C depicts the same positive electrode current collector 130 viewed from below.

As shown in FIGS. 3A to 3C, the positive electrode current collector 130 includes a terminal connecting portion 131, a first electrode connecting portion 132, a second electrode connecting portion 133, a first twisted portion 134, and a second twisted portion 135. In these drawings, a forward direction of the positive electrode current collector 130 will be referred to as plus direction along X-axis (backward direction as minus direction along X-axis), a right direction will be referred to as plus direction along Y-axis (left direction as minus direction along Y-axis), and an upward direction will be referred to as plus direction along Z-axis (downward direction as minus direction along Z-axis).

The terminal connecting portion 131 is a plate-shaped portion located on the side of the positive electrode terminal 200 or the negative electrode terminal 300 (plus direction along Z-axis) and electrically connected to the positive electrode terminal 200 or the negative electrode terminal 300. In this embodiment the terminal connecting portion 131 belongs to the positive electrode current collector 130, and is hence located on the side of the positive electrode terminal 200 and electrically connected to the positive electrode terminal 200. More particularly, the terminal connecting portion 131 is fixed to the cover plate 110 and the positive electrode terminal 200 by rivet crimping or the like, thus to be electrically connected to the positive electrode terminal 200.

The first electrode connecting portion 132 is a portion extending forward (plus direction along X-axis) and downward (minus direction along Z-axis) from the right frontal portion 131a of the terminal connecting portion 131 and including a first surface 132a to be connected to the positive electrode or the negative electrode of the electrode assembly 120. Since the first electrode connecting portion 132 belongs to the positive electrode current collector 130 in this embodiment, the first surface 132a is fixed to the positive electrode of the electrode assembly 120 by welding or the like. The first electrode connecting portion 132 is a slender plate-shaped portion having the longitudinal sides extending along the Z-axis.

The second electrode connecting portion 133 is a portion extending forward (plus direction along X-axis) and downward (minus direction along Z-axis) from the left frontal portion 131b of the terminal connecting portion 131 and including a second surface 133a to be connected to the positive electrode or the negative electrode of the electrode assembly 120, the second surface 133a being oriented so as to oppose the first surface 132a. Since the second electrode connecting portion 133 belongs to the positive electrode current collector 130 in this embodiment, the second surface 133a is fixed to the positive electrode of the electrode assembly 120 by welding or the like. The second electrode connecting portion 133 is a slender plate-shaped portion having the longitudinal sides extending along the Z-axis.

The second surface 133a is parallel to the first surface 132a. A clearance between surfaces (distance A shown in FIGS. 3B and 3C), which is a distance between the first surface 132a and the second surface 133a in the left-right direction (Y-axis direction) is larger than a distance between the center of the right frontal portion 131a in the left-right direction and the center of the left frontal portion 131b in the left-right direction (distance B shown in FIGS. 3B and 3C). In addition, it is preferable that the clearance between surfaces (distance A) is larger than a distance between the right edge of the right frontal portion 131a and the left edge of the left frontal portion 131b in the left-right direction (distance C shown in FIGS. 3B and 3C).

Here, it is not mandatory that the first surface 132a and the second surface 133a are strictly parallel to each other, but a slight inclination is permissible. In this case, an average value of the distance between the first surface 132a and the second surface 133a in the left-right direction may be adopted as the clearance between surfaces. Accordingly, it suffices that the average value of the distance between the first surface 132a and the second surface 133a in the left-right direction is larger than the distance B, and it is preferable that the average value is larger than the distance C.

Further, a minimum value of the distance between the first surface 132a and the second surface 133a in the left-right direction may be adopted as the clearance between surfaces. In this case, it is preferable that the minimum value of the distance between the first surface 132a and the second surface 133a in the left-right direction is larger than the distance B, and it is more preferable that the minimum value is larger than the distance C.

The first twisted portion 134 is formed such that an end portion thereof is connected to the right frontal portion 131a of the terminal connecting portion 131 and the other end portion is connected to an upper end portion 132b of the first electrode connecting portion 132. To be more detailed, the first twisted portion 134 presents a shape that can be formed by twisting a flat plate in a plurality of stages, and constitutes an intermediate portion between the right frontal portion 131a and the upper end portion 132b of the first electrode connecting portion 132.

More specifically, in this embodiment the first twisted portion 134 is formed by twisting the positive electrode current collector 130 so as to displace the twisting axis from the center of the right frontal portion 131a toward the right edge of the right frontal portion 131a. Here, it is preferable to twist the positive electrode current collector 130 so as to displace the twisting axis from the center of the right frontal portion 131a as far as the right edge thereof.

In this embodiment, a length of the right frontal portion 131a in the left-right direction (Y-axis direction) is generally the same as a length of the upper end portion 132b of the first electrode connecting portion 132 in the forward-backward direction (X-axis direction). In other words, a length of an end portion of the first twisted portion 134 in the left-right direction is generally the same as a length of the other end portion thereof in the forward-backward direction. Such a configuration of the first twisted portion 134 is obtained by twisting a rectangular plate in a plurality of stages.

The second twisted portion 135 is formed such that an end portion thereof is connected to the left frontal portion 131b of the terminal connecting portion 131 and the other end portion is connected to an upper end portion 133b of the second electrode connecting portion 133. To be more detailed, the second twisted portion 135 presents a shape that can be formed by twisting a flat plate in a plurality of stages, and constitutes an intermediate portion between the left frontal portion 131b and the upper end portion 133b of the second electrode connecting portion 133.

More specifically, in this embodiment the second twisted portion 135 is formed by twisting the positive electrode current collector 130 so as to displace the twisting axis from the center of the left frontal portion 131b toward the left edge of the left frontal portion 131b. Here, it is preferable to twist the positive electrode current collector 130 so as to displace the twisting axis from the center of the left frontal portion 131b as far as the left edge thereof.

In this embodiment, a length of the left frontal portion 131b in the left-right direction (Y-axis direction) is generally the same as a length of the upper end portion 133b of the second electrode connecting portion 133 in the forward-backward direction (X-axis direction). In other words, a length of one end portion of the second twisted portion 135 in the left-right direction is generally the same as a length of the other end portion thereof in the forward-backward direction. Such a configuration of the second twisted portion 135 is obtained by twisting a rectangular plate in a plurality of stages.

Hereunder, a method of manufacturing the positive electrode current collector 130 and the negative electrode current collector 140 will now be described. The positive electrode current collector 130 and the negative electrode current collector 140 are manufactured through the same process, and therefore only the manufacturing method of the positive electrode current collector 130 will be described below, without particular reference to the negative electrode current collector 140.

FIG. 4 is a flowchart showing the manufacturing process of the positive electrode current collector 130 according to the embodiment of the present invention.

FIGS. 5A to 5C are drawings for explaining the manufacturing method of the positive electrode current collector 130 according to this embodiment. More specifically, FIG. 5A depicts the positive electrode current collector 130 viewed from the right (plus side in Y-axis direction), FIG. 5B depicts the positive electrode current collector 130 viewed from below (minus side in Z-axis direction), and FIG. 5C depicts the positive electrode current collector 130 from the front (plus side in X-axis direction).

Referring to FIG. 4, as a first twisting process the first electrode connecting portion 132 is rotated with respect to the terminal connecting portion 131 and twisted downward, such that the first surface 132a extends forward and downward from the right frontal portion 131a, to thereby form the first twisted portion 134 having an end portion connected to the right frontal portion 131a and the other end portion connected to the upper end portion 132b of the first electrode connecting portion 132 (S102).

More specifically, as shown in FIGS. 5A to 5C, the first electrode connecting portion 132 of a positive electrode current collector material 130a, which is the material to be formed into the positive electrode current collector 130, is twisted in a direction indicated by R1 (downward) and rotated in a direction indicated by R2 with respect to the terminal connecting portion 131. Even more specifically, the first electrode connecting portion 132 is twisted in the R1 direction and the R2 direction, in a plurality of stages.

As a result, a flat plate-shaped portion of the positive electrode current collector material 130a is twisted in the plurality of stages, and thus the first twisted portion 134 is formed. In addition, the first surface 132a constitutes a surface extending forward (plus direction along X-axis) and downward (minus direction along Z-axis) from the right frontal portion 131a.

Referring again to FIG. 4, then the second twisting process is performed in which the second electrode connecting portion 133 is rotated with respect to the terminal connecting portion 131 and twisted downward, such that the second surface 133a extends forward and downward from the left frontal portion 131b and opposes the first surface 132a, to thereby form the second twisted portion 135 having an end portion connected to the left frontal portion 131b and the other end portion connected to the upper end portion 133b of the second electrode connecting portion 133 (S104).

More specifically, as shown in FIGS. 5A to 5C, the second electrode connecting portion 133 of the positive electrode current collector material 130a is twisted in a direction indicated by R1 (downward) and rotated in a direction indicated by R4 with respect to the terminal connecting portion 131. Even more specifically, the second electrode connecting portion 133 is twisted in the R3 direction and the R4 direction, in a plurality of stages.

As a result, the flat plate-shaped portion of the positive electrode current collector material 130a is twisted in the plurality of stages, and thus the second twisted portion 135 is formed. In addition, the second surface 133a constitutes a surface extending forward (plus direction along X-axis) and downward (minus direction along Z-axis) from the left frontal portion 131b, i.e., a surface opposing the first surface 132a and parallel thereto.

In the first twisting process (S102) or the second twisting process (S104), the first electrode connecting portion 132 or the second electrode connecting portion 133 is twisted such that the distance A, which is the clearance between surfaces defined as the distance between the first surface 132a and the second surface 133a in the left-right direction, becomes larger than the distance B between the center of the right frontal portion 131a in the left-right direction and the center of the left frontal portion 131b in the left-right direction. In this process, in addition, it is preferable to twist the first electrode connecting portion 132 or the second electrode connecting portion 133 such that the clearance between surfaces (distance A) becomes larger than the distance C in the left-right direction between the right edge of the right frontal portion 131a and the left edge of the left frontal portion 131b.

In the foregoing manufacturing method of the positive electrode current collector 130, the order of the first twisting process (S102) and the second twisting process (S104) may be reversed, or the first twisting process (S102) and the second twisting process (S104) may be performed at the same time.

In addition, in the first twisting process (S102) or the second twisting process (S104) in which the first electrode connecting portion 132 or the second electrode connecting portion 133 is twisted, the minimum value of the distance between the first surface 132a and the second surface 133a in the left-right direction may be adopted as the clearance between surfaces.

Now, advantageous effects provided by the positive electrode current collector 130 according to this embodiment will be described hereunder.

FIGS. 6 and 7 are drawings for explaining the advantageous effects of the positive electrode current collector 130 according to this embodiment. More particularly, FIG. 6 depicts a configuration of a conventional current collector 150, and FIG. 7 depicts the conventional current collector 150 and the positive electrode current collector 130 according to this embodiment, for comparison therebetween.

As shown in FIG. 6, to form the conventional current collector 150, a first electrode connecting portion 152 and a second electrode connecting portion 153 of a current collector material 150a, which is the material to be formed into the current collector 150, are bent in a direction indicated by R5 (vertically downward) and rotated by 90 degrees in a direction indicated by R6 with respect to the terminal connecting portion 151. As a result, a first twisted portion 154 and a second twisted portion 155 are formed.

In this case, the first twisted portion 154 and the second twisted portion 155 are formed by sharply twisting the first electrode connecting portion 152 and the second electrode connecting portion 153 in the R5 and R6 directions. Accordingly, stress originating from the twisting action concentrates at the first twisted portion 154 and the second twisted portion 155.

A surface of the first electrode connecting portion 152 on the left side (minus side in Y-axis direction) constitutes a first surface 152a extending forward (plus direction along X-axis) and downward (minus direction along Z-axis) from a right frontal portion 151a. Likewise, a surface of the second electrode connecting portion 153 on the right side (plus side in Y-axis direction) constitutes a second surface 153a extending forward (plus direction along X-axis) and downward (minus direction along Z-axis) from a left frontal portion 151b in parallel to the first surface 152a.

Here, a distance A' between the first surface 152a and the second surface 153a in the left-right direction is equal to or smaller than a distance B' between the center of the right frontal portion 151a in the left-right direction and the center of the left frontal portion 151b in the left-right direction.

Therefore, as shown in FIG. 7, in order to make the distance A' in the conventional current collector 150 equal to the distance A in the positive electrode current collector 130 according to this embodiment, the current collector material 150a has to be made larger than the positive electrode current collector material 130a.

In other words, to make the distance A equal to the distance A', dimensions of material 136 necessary for forming the positive electrode current collector material 130a may be smaller than dimensions of material 156 necessary for forming the current collector material 150a. Conversely, in the case of employing the materials of the same dimensions, the distance A in the positive electrode current collector 130 can be made larger than the distance A' in the current collector 150.

As described above, in the positive electrode current collector 130 according to the embodiment, the distance A in the left-right direction between the first surface 132a of the first electrode connecting portion 132 and the second surface 133a of the second electrode connecting portion 133 is larger than the distance B between the center of the right frontal portion 131a of the terminal connecting portion 131 in the left-right direction and the center of the left frontal portion 131b of the terminal connecting portion 131 in the left-right direction. In the conventional current collector 150, in contrast, the distance A' between the first surface 152a and the second surface 153a in the left-right direction is generally the same as the distance B' between the center of the right frontal portion 151a in the left-right direction and the center of the left frontal portion 151b in the left-right direction. Accordingly, the positive electrode current collector 130 according to the embodiment can be formed with a larger distance between the first surface 132a and the second surface 133a in the left-right direction compared with the conventional current collector 150, and therefore a larger width between the pair of electrode connecting portions can be obtained from the material of the same size, which enables reduction in size of the material to be prepared.

In addition, the first electrode connecting portion 132 is connected to the positive electrode of the electrode assembly 120 via the first surface 132a, and the second electrode connecting portion 133 is connected to the positive electrode of the electrode assembly 120 via the second surface 133a. In other words, the electrode assembly 120 is placed bertween the first surface 132a and the second surface 133a. Now, as described above the positive electrode current collector 130 having a larger width between the first surface 132a and the second surface 133a can be obtained from the material of the same size. Accordingly, the electrode assembly 120 having a larger width can be placed between the first surface 132a and the second surface 133a, which leads to improved energy density of the energy storage element 10.

Therefore, with the configuration in which the electrode assembly 120 is placed between the first electrode connecting portion 132 and the second electrode connecting portion 133, the electrode assembly 120 of a larger size can be placed and thus the capacity per cell can be increased, despite employing the material of the same size. In addition, when a current collector foil of the electrode assembly 120 is to be welded to the current collector, it is not necessary to inwardly squeeze the current collector foil so as to reduce the width, and therefore the stress imposed on the current collector foil can be alleviated.

Further, the distance A in the left-right direction between the first surface 132a of the first electrode connecting portion 132 and the second surface 133a of the second electrode connecting portion 133 may be made larger than the distance C in the left-right direction between the right edge of the right frontal portion 131a of the terminal connecting portion 131 and the left edge of the left frontal portion 131b of the terminal connecting portion 131. In this case, the distance A between the first surface 132a and the second surface 133a in the left-right direction can be made even larger, and therefore the distance between the pair of electrode connecting portions can be further increased despite using the material of the same size, which enables further reduction in size of the material to be prepared.

It is preferable that the minimum value of the distance between the respective surfaces, namely the first surface 132a and the second surface 133a, is larger than the distance B between the center of the right frontal portion 131a in the left-right direction and the center of the left frontal portion 131b in the left-right direction, and more preferably larger than the distance C between the respective edges, namely the right edge of the right frontal portion 131a and the left edge of the left frontal portion 131b. In other words, whereas the distance between the first surface 132a and the second surface 133a is not constant in the case where the pair of surfaces are not parallel to each other, the minimum value of the distance between those surfaces is larger than the distance B between the centers of the right and left frontal portions, or the distance C between the respective edges thereof. With the positive electrode current collector 130 according to the embodiment, therefore, the distance between the first surface 132a and the second surface 133a in the left-right direction can be made even larger, and hence the distance between the pair of electrode connecting portions can be further increased despite using the material of the same size, which enables further reduction in size of the material to be prepared. Further, the aforementioned configuration eliminates the need to process the first electrode connecting portion 132 and the second electrode connecting portion 133, which are the leg portions of the positive electrode current collector 130, after forming the positive electrode current collector 130 by twisting.

The length of the right frontal portion 131a of the terminal connecting portion 131 in the left-right direction is generally the same as the length of the upper end portion 132b of the first electrode connecting portion 132 in the forward-backward direction, and the length of the left frontal portion 131b of the terminal connecting portion 131 in the left-right direction is generally the same as the length of the upper end portion 133b of the second electrode connecting portion 133 in the forward-backward direction. In other words, the first electrode connecting portion 132 and the first twisted portion 134 connecting between the right frontal portion 131a and the upper end portion 132b of the first electrode connecting portion132 are formed from a plate of the same width, and the second electrode connecting portion 133 and the second twisted portion 135 connecting between the left frontal portion 131b and the upper end portion 133b of the second electrode connecting portion 133 are formed from the plate of the same width. Forming thus the material of the first twisted portion 134 and the first electrode connecting portion 132 of the positive electrode current collector 130 in the same width, and the material of the second twisted portion 135 and the second electrode connecting portion 133 in the same width facilitates the processing of the material, and contributes to reducing the size of the material to be prepared.

The first twisted portion 134 has the shape that can be formed by twisting a plate in a plurality of stages, and is located between the right frontal portion 131a of the terminal connecting portion 131 and the upper end portion 132b of the first electrode connecting portion 132, and the second twisted portion 135 has the shape that can be formed by twisting a plate in a plurality of stages, and is located between the left frontal portion 131b of the terminal connecting portion 131 and the upper end portion 133b of the second electrode connecting portion 133. Since the first twisted portion 134 and the second twisted portion 135 are formed by twisting a plate in a plurality of stages, the stress originating from the twisting process is dispersed, and therefore concentration of the stress at a specific position can be avoided.

It is to be noted that the negative electrode current collector 140 provides the same advantageous effects as those offered by the positive electrode current collector 130. In particular, whereas the negative electrode current collector 140 is formed of copper which is expensive, reducing the size of the material to be utilized significantly contributes to reducing the manufacturing cost.

Further, the manufacturing method of the positive electrode current collector 130 according to the embodiment includes the first twisting process in which the first electrode connecting portion 132 is rotated and twisted downward with respect to the terminal connecting portion 131 such that the first surface 132a of the first electrode connecting portion 132 extends forward and downward from the right frontal portion 131a, and the second twisting process in which the second electrode connecting portion 133 is rotated and twisted downward with respect to the terminal connecting portion 131 such that the second surface 133a of the second electrode connecting portion 133 extends forward and downward from the left frontal portion 131b. In the first twisting process or the second twisting process, the first electrode connecting portion 132 or the second electrode connecting portion 133 is twisted such that the distance A between the first surface 132a and the second surface 133a in the left-right direction becomes larger than the distance B between the center of the right frontal portion 131a in the left-right direction and the center of the left frontal portion131b in the left-right direction. By the manufacturing method of the conventional current collector 150, in contrast, the first electrode connecting portion 152 and the second electrode connecting portion 153 are twisted such that the distance A' between the first surface 152a and the second surface 153a in the left-right direction becomes generally the same as the distance B' between the center of the right frontal portion 151a in the left-right direction and the center of the left frontal portion 151b in the left-right direction. Accordingly, the manufacturing method according to the embodiment enables the the positive electrode current collector 130 to be formed with a larger distance between the first surface 132a and the second surface 133a in the left-right direction compared with the conventional method, and therefore a larger width between the pair of electrode connecting portions can be obtained from the material of the same size, which enables reduction in size of the material to be prepared.

In the first twisting process or the second twisting process, the first electrode connecting portion 132 or the second electrode connecting portion 133 may be twisted such that the distance A in the left-right direction between the first surface 132a of the first electrode connecting portion 132 and the second surface 133a of the second electrode connecting portion 133 becomes larger than the distance C between the right edge of the right frontal portion 131a and the left edge of the left frontal portion 131b in the left-right direction. With the manufacturing method of the positive electrode current collector 130 according to the embodiment, the distance between the first surface 132a and the second surface 133a in the left-right direction can be made even larger, and therefore the distance between the pair of electrode connecting portions can be further increased despite using the material of the same size, which enables further reduction in size of the material to be prepared.

In the first twisting process or the second twisting process, the first electrode connecting portion 132 or the second electrode connecting portion 133 is twisted such that the minimum value of the distance between the respective surfaces, namely the first surface 132a and the second surface 133a, becomes larger than the distance B between the center of the right frontal portion 131a in the left-right direction and the center of the left frontal portion 131b in the left-right direction, or larger than the distance C between the respective edges, namely the right edge of the right frontal portion 131a and the left edge of the left frontal portion 131b. In other words, whereas the distance between the first surface 132a and the second surface 133a is not constant in the case where the pair of surfaces are not parallel to each other, the electrode connecting portions are twisted such that the minimum value of the distance between those surfaces becomes larger than the distance B between the centers of the right and left frontal portions, or the distance C between the respective edges thereof. With the manufacturing method of the positive electrode current collector 130 according to the embodiment, therefore, the distance between the first surface 132a and the second surface 133a in the left-right direction can be made even larger, and hence the distance between the pair of electrode connecting portions can be further increased despite using the material of the same size, which enables further reduction in size of the material to be prepared. Further, the aforementioned configuration eliminates the need to process the first electrode connecting portion 132 and the second electrode connecting portion 133, which are the leg portions of the positive electrode current collector 130, after forming the positive electrode current collector 130 by twisting.

It is to be noted that although the embodiment of the current collector, the manufacturing method of the current collector, and the energy storage element have been described as above, the present invention is in no way limited to the foregoing embodiment.

In other words, the embodiment described above is merely exemplary in all aspects and not intended to limit the present invention. The present invention is limited exclusively by the appended claims, and includes all modifications that are equivalent thereto.

For example, the first electrode connecting portion 132 and the second electrode connecting portion 133 of the positive electrode current collector 130 may be formed in a tapered shape such that the width decreases toward the distal end portion, as shown in FIGS. 8A and 8B. FIGS. 8A and 8B are front views each showing a positive electrode current collector according to a variation of the embodiment of the present invention.

In the positive electrode current collector 160 shown in FIG. 8A, the first electrode connecting portion 162 and the second electrode connecting portion 163 are inwardly inclined (so as to oppose in Y-axis direction) such that the clearance therebetween becomes narrower toward the distal end portion. In other words, the first surface 162a and the second surface 163a are inwardly inclined such that a width E of the distal end portion becomes narrower.

In addition, as shown in FIG. 8A, a distance D is made larger than the distance B, and more preferably the distance D may be larger than the distance C. Here, the distance D represents the clearance between surfaces defined as the distance in the left-right direction (Y-axis direction) between a first upper end portion 162b which is the upper end portion of the first surface 162a and a second upper end portion 163b which is the upper end portion of the second surface 163a. The distance B represents, as in the foregoing embodiment, the distance between the center of a right frontal portion 161a of the terminal connecting portion 161 in the left-right direction and the center of a left frontal portion 161b of the terminal connecting portion 161 in the left-right direction. In addition, the distance C represents, as in the foregoing embodiment, the distance in the left-right direction between the right edge of the right frontal portion 161a and the left edge of the left frontal portion 161b.

To manufacture the positive electrode current collector 160, the first electrode connecting portion 132 or the second electrode connecting portion 133 may be twisted in the first twisting process (S102 in FIG. 4) or the second twisting process (S104 in FIG. 4) such that the clearance between surfaces becomes equal to the distance between the first upper end portion 162b and the second upper end portion 163b in the left-right direction.

Likewise, in the positive electrode current collector 170 shown in FIG. 8B, the first electrode connecting portion 172 and the second electrode connecting portion 173 are inwardly bent (so as to oppose in Y-axis direction) halfway, such that the clearance therebetween becomes narrower toward the distal end portion. In other words, the first surface 172a and the second surface 173a are inwardly gent halfway such that a width F of the distal end portion becomes narrower.

In addition, as shown in FIG. 8B, the distance D is made larger than the distance B, and more preferably the distance D may be larger than the distance C. Here, the distance D represents, as in FIG. 8A, the clearance between surfaces defined as the distance in the left-right direction (Y-axis direction) between a first upper end portion 172b and a second upper end portion 173b, the distance B represents the distance between the center of a right frontal portion 171a and the center of a left frontal portion 171b, and the distance C represents the distance in the left-right direction between the right edge of the right frontal portion 171a and the left edge of the left frontal portion 171b. Further, the positive electrode current collector 170 can also be manufactured through the same manufacturing process as that of the positive electrode current collector 160.

As described above, the positive electrode current collectors 160, 170 according to the foregoing variations can also be formed with a larger width between the first surface 162a, 172a and the second surface 163a, 173a in the left-right direction, and therefore provides the same advantageous effects as those offered by the foregoing embodiment.

Further, the positive electrode current collectors 130, 160, 170 according to the foregoing embodiment and the variations thereof each include the first twisted portion 134, 164, 174 and the second twisted portion 135, 165, 175 formed in the shape shown in FIGS. 3A to 3C and FIGS. 8A and 8B, on the right and left sides. However, the positive electrode current collectors 130, 160, 170 may only include one of the first twisted portion 134, 164, 174 and the second twisted portion 135, 165, 175 on either side, and the twisted portion on the other side may be configured as that of the conventional current collector 150.

### Industrial Applicability

The present invention provides a current collector that can be formed with a larger width between the pair of electrode connecting portions without an increase in area of the material and thus allows the material size to be reduced, and is therefore advantageously applicable to current collectors of energy storage elements such as a lithium ion battery.

### Reference Signs List

10 Energy storage element
100 Container
110 Cover plate
120 Electrode assembly
130, 160, 170 Positive electrode current collector
130a Positive electrode current collector material
131, 161, 171 Terminal connecting portion
131a, 161a, 171a Right frontal portion
131b, 161b, 171b Left frontal portion
132, 162, 172 First electrode connecting portion
132a, 162a, 172a First surface
132b Upper end portion
133, 163, 173 Second electrode connecting portion
133a, 163a, 173a Second surface
133b Upper end portion
134, 164, 174 First twisted portion
135, 165, 175 Second twisted portion
136 Dimensions of material
140 Negative electrode current collector
150 Current collector
150a Current collector material
151 Terminal connecting portion
151a Right frontal portion
151b Left frontal portion
152 First electrode connecting portion
152a First surface
153 Second electrode connecting portion
153a Second surface
154 First twisted portion
155 Second twisted portion
156 Dimensions of material
162b, 172b First upper end portion
163b, 173b Second upper end portion
200 Positive electrode terminal
300 Negative electrode terminal

## Claims

1. A current collector (130, 140, 150, 160, 170) comprising:
a terminal connecting portion (131, 151, 161, 171);
a first electrode connecting portion (132, 152, 162, 172) including a first surface (132a, 152a, 162a, 172a) extending forward and downward from a right frontal portion (131a, 151a, 161a, 171a) of the terminal connecting portion (131, 151, 161, 171);
a second electrode connecting portion (133, 153, 163, 173) including a second surface (133a, 153a, 163a, 173a) extending forward and downward from a left frontal portion (131b, 151b, 161b, 171b) of the terminal connecting portion (131, 151, 161, 171) and opposing the first surface (132a, 152a, 162a, 172a);
a first twisted portion (134, 154, 164, 174) having an end portion connected to the right frontal portion (131a, 151a, 161a, 171a) and the other end portion connected to an upper end portion (132b) of the first electrode connecting portion (132, 152, 162, 172); and
a second twisted portion (135, 155, 165, 175) having an end portion connected to the left frontal portion (131 b, 151 b, 161b. 171 b) and the other end portion connected to an upper end portion (133b) of the second electrode connecting portion (133, 153, 163, 173),
**characterized in that**
a clearance between surfaces, defined as a first distance (A) between the first surface (132a, 152a, 162a, 172a) and the second surface (133a, 153a, 163a, 173a) in a left-right direction, is larger than a second distance (B) between the center of the right frontal portion (131a, 151a, 161a, 171a) in the left-right direction and the center of the left frontal portion (131b, 151b, 161b, 171b) in the left-right direction.

2. The current collector (130, 140, 150, 160, 170) according to claim 1,
wherein the clearance between surfaces is larger than a third distance (C) between the right edge of the right frontal portion (131 a, 151 a, 161 a, 171 a) and the left edge of the left frontal portion (131 b, 151 b, 161 b, 171 b) in the left-right direction.

3. The current collector (130, 140, 150, 160, 170) according to claim 1 or 2,
wherein the clearance between surfaces is defined as a distance in the left-right direction between an upper end portion (162b, 172b) of the first surface (132a, 152a, 162a, 172a) and an upper end portion (163b, 173b) of the second surface (133a, 153a, 163a, 173a).

4. The current collector (130, 140, 150, 160, 170) according to claim 1 or 2,
wherein the clearance between surfaces is defined as a minimum value of the distance between the first surface (132a, 152a, 162a, 172a) and the second surface (133a, 153a, 163a, 173a) in the left-right direction.

5. The current collector (130, 140, 150, 160, 170) according to any of claims 1 to 4,
wherein a length of the right frontal portion (131a, 151a, 161a, 171a) in the left-right direction is generally the same as a length of the upper end portion (132b) of the first electrode connecting portion (132, 152, 162, 172) in a forward-backward direction, or a length of the left frontal portion (131 b, 151 b, 161 b, 171 b) in the left-right direction is generally the same as a length of the upper end portion (133b) of the second electrode connecting portion (133, 153, 163, 173) in the forward-backward direction.

6. The current collector (130, 140, 150, 160, 170) according to any of claims 1 to 5,
wherein the first twisted portion (134, 154, 164, 174) has a shape formed by twisting a flat plate in a plurality of stages, and constitutes an intermediate portion between the right frontal portion (131 a, 151a, 161 a, 171 a) and the upper end portion (132b) of the first electrode connecting portion (132, 152, 162, 172), or the second twisted portion (135, 155, 165, 175) has a shape formed by twisting a flat plate in a plurality of stages, and constitutes an intermediate portion between the left frontal portion (131 b, 151b, 161 b, 171 b) and the upper end portion (133b) of the second electrode connecting portion (133, 153, 163, 173).

7. The current collector (130, 140, 150, 160, 170) according to any of claims 1 to 6, the current collector (130, 140, 150, 160, 170) being provided in an energy storage element (10) including (i) an electrode assembly (120) having a positive electrode and a negative electrode, and (ii) a positive electrode terminal (200) and a negative electrode terminal (300) located above the electrode assembly (120),
wherein the terminal connecting portion (131, 151, 161, 171) is located on the side of the positive electrode terminal (200) or the negative electrode terminal (300) and electrically connected to the positive electrode terminal (200) or the negative electrode terminal (300),
the first electrode connecting portion (132, 152, 162,172) is connected to the positive electrode or the negative electrode via the first surface (132a, 152a, 162a, 172a), and
the second electrode connecting portion (133, 153, 163, 173) is connected to the positive electrode or the negative electrode via the second surface (133a, 153a, 163a, 173a).

8. An energy storage element (10) comprising:
an electrode assembly (120) having a positive electrode and a negative electrode;
a positive electrode terminal (200);
a negative electrode terminal (300); and
the current collector (130, 140, 150, 160, 170) according to any of claims 1 to 7, electrically connecting at least one of between the positive electrode and the positive electrode terminal (200) and between the negative electrode and the negative electrode terminal (300).

9. A method of manufacturing a current collector, wherein the current collector includes a terminal connecting portion; a first electrode connecting portion including a first surface extending forward from a right frontal portion of the terminal connecting portion; and a second electrode connecting portion including a second surface extending forward from a left frontal portion of the terminal connecting portion,
and wherein the method comprises the steps of:
forming a first twisted portion having an end portion connected to the right frontal portion and the other end portion connected to an upper end portion of the first electrode connecting portion, by rotating and twisting downward the first electrode connecting portion with respect to the terminal connecting portion such that the first surface extends forward and downward from the right frontal portion; and
forming a second twisted portion having an end portion connected to the left frontal portion and the other end portion connected to an upper end portion of the second electrode connecting portion, by rotating and twisting downward the second electrode connecting portion with respect to the terminal connecting portion such that the second surface extends forward and downward from the left frontal portion so as to oppose the first surface,
**characterized in that**
the step of forming of the first twisted portion or the forming of the second twisted portion includes twisting the first electrode connecting portion or twisting the second electrode connecting portion such that a clearance between surfaces a distance between the first surface and the second surface in the left-right direction becomes larger than a distance between the center of the right frontal portion in the left-right direction and the center of the left frontal portion in the left-right direction.

10. The method according to claim 9,
wherein the step of forming of the first twisted portion or the forming of the second twisted portion includes twisting the first electrode connecting portion or twisting the second electrode connecting portion such that the clearance between surfaces becomes larger than a distance between the right edge of the right frontal portion and the left edge of the left frontal portion in the left-right direction.

11. The method according to claim 9 or 10,
wherein the step of forming of the first twisted portion or the forming of the second twisted portion includes twisting the first electrode connecting portion or twisting the second electrode connecting portion such that the clearance between surfaces becomes equal to a distance between an upper end portion of the first surface and an upper end portion of the second surface in the left-right direction.

12. The method according to claim 9 or 10,
wherein the step of forming of the first twisted portion or the forming of the second twisted portion includes twisting the first electrode connecting portion or twisting the second electrode connecting portion such that the clearance between surfaces becomes equal to a minimum value of the distance between the first surface and the second surface in the left-right direction.

## Patentansprüche

1. Stromsammler (130, 140, 150, 160, 170), der umfasst:
einen Anschluss-Verbindungsabschnitt (131, 151, 161, 171);
einen ersten Elektroden-Verbindungsabschnitt (132, 152, 162, 172), der eine erste Fläche (132a, 152a, 162a, 172a) enthält, die sich von einem rechten vorderen Abschnitt (131a, 151a, 161a, 171a) des Anschluss-Verbindungsabschnitts (131, 151, 161, 171) nach vorn und nach unten erstreckt;
einen zweiten Elektroden-Verbindungsabschnitt (133, 153, 163, 173), der eine zweite Fläche (133a, 153a, 163a, 173a) enthält, die sich von einem linken vorderen Abschnitt (131b, 151b, 161b, 171b) des Anschluss-Verbindungsabschnitts (131, 151, 161, 171) nach vorn und nach unten erstreckt und der ersten Fläche (132a, 152a, 162a, 172a) gegenüberliegt;
einen ersten verdrehten Abschnitt (134, 154, 164, 174), dessen einer Endabschnitt mit dem rechten vorderen Abschnitt (131a, 151a, 161a, 171a) verbunden ist und dessen anderer Endabschnitt mit einem oberen Endabschnitt (132b) des ersten Elektroden-Verbindungsabschnitts (132, 152, 162, 172) verbunden ist; und
einen zweiten verdrehten Abschnitt (135, 155, 165, 175), dessen einer Endabschnitt mit dem linken vorderen Abschnitt (131 b, 151 b, 161 b, 171 b) verbunden ist und dessen anderer Endabschnitt mit einem oberen Endabschnitt (133b) des zweiten Elektroden-Verbindungsabschnitts (133, 153, 163, 173) verbunden ist,
**dadurch gekennzeichnet, dass**
ein Zwischenraum zwischen Flächen, der als ein erster Abstand (A) zwischen der ersten Fläche (132a, 152a, 162a, 172a) und der zweiten Fläche (133a, 153a, 163a, 173a) in einer Links-Rechts-Richtung definiert ist, größer ist als ein zweiter Abstand (B) zwischen der Mitte des rechten vorderen Abschnitts (131a, 151a, 161a, 171a) in der Links-Rechts-Richtung und der Mitte des linken vorderen Abschnitts (131b, 151b, 161 b, 171 b) in der Links-Rechts-Richtung.

2. Stromsammler (130, 140, 150, 160, 170) nach Anspruch 1,
wobei der Zwischenraum zwischen Flächen größer ist als ein dritter Abstand (C) zwischen der rechten Kante des rechten vorderen Abschnitts (131 a, 151 a, 161 a, 171 a) und der linken Kante des linken vorderen Abschnitts (131b, 151b, 161b, 171b) in der Links-Rechts-Richtung.

3. Stromsammler (130, 140, 150, 160, 170) nach Anspruch 1 oder 2,
wobei der Zwischenraum zwischen Flächen als ein Abstand in der Links-Rechts-Richtung zwischen einem oberen Endabschnitt (162b, 172b) der ersten Fläche (132a, 152a, 162a, 172a) und einem oberen Endabschnitt (163b, 173b) der zweiten Fläche (133a, 153a, 163a, 173a) definiert ist.

4. Stromsammler (130, 140, 150, 160, 170) nach Anspruch 1 oder 2,
wobei der Zwischenraum zwischen Flächen als ein minimaler Wert des Abstandes zwischen der ersten Fläche (132a, 152a, 162a, 172a) und der zweiten Fläche (133a, 153a, 163a, 173a) in der Links-Rechts-Richtung definiert ist.

5. Stromsammler (130, 140, 150, 160, 170) nach einem der Ansprüche 1 bis 4,
wobei eine Länge des rechten vorderen Abschnitts (131 a, 151 a, 161 a, 171 a) in der Links-Rechts-Richtung im Allgemeinen die gleiche ist wie eine Länge des oberen Endabschnitts (132b) des ersten Elektroden-Verbindungsabschnitts (132, 152, 162, 172) in einer Vorn-Hinten-Richtung, oder eine Länge des linken vorderen Abschnitts (131 b, 151b, 161 b, 171 b) in der Links-Rechts-Richtung im Allgemeinen die gleiche ist wie eine Länge des oberen Endabschnitts (133b) des zweiten Elektroden-Verbindungsabschnitts (133, 153, 163, 173) in der Vorn-Hinten -Richtung.

6. Stromsammler (130, 140, 150, 160, 170) nach einem der Ansprüche 1 bis 5,
wobei der erste verdrehte Abschnitt (134, 154, 164, 174) eine Form hat, die ausgebildet wird, indem eine flache Platte in einer Vielzahl von Stufen verdreht wird, und er einen Zwischenabschnitt zwischen dem rechten vorderen Abschnitt (131a, 151a, 161a, 171a) und dem oberen Endabschnitt (132b) des ersten Elektroden-Verbindungsabschnitts (132, 152, 162, 172) bildet, oder der zweite verdrehte Abschnitt (135, 155, 165, 175) eine Form hat, die ausgebildet wird, indem eine flache Platte in einer Vielzahl von Stufen verdreht wird, und er einen Zwischenabschnitt zwischen dem linken vorderen Abschnitt (131 b, 151b, 161 b, 171 b) und dem oberen Endabschnitt (133b) des zweiten Elektroden-Verbindungsabschnitts (133, 153, 163, 173) bildet.

7. Stromsammler (130, 140, 150, 160, 170) nach einem der Ansprüche 1 bis 6, wobei sich der Stromsammler (130, 140, 150, 160, 170) in einem Energiespeicherelement (10) befindet, das a) eine Elektrodenanordnung (120) mit einer positiven Elektrode und einer negativen Elektrode sowie b) einen positiven Elektrodenanschluss (200) und einen negativen Elektrodenanschluss (300) enthält, die über der Elektrodenanordnung (120) angeordnet sind,
wobei der Anschluss-Verbindungsabschnitt (131, 151, 161, 171) an der Seite des positiven Elektrodenanschlusses (200) oder des negativen Elektrodenanschlusses (300) angeordnet und elektrisch mit dem positiven Elektrodenanschluss (200) oder dem negativen Elektrodenanschluss (300) verbunden ist,
der erste Elektroden-Verbindungsabschnitt (132, 152, 162; 172) über die erste Fläche (132a, 152a, 162a; 172a) mit der positiven Elektrode oder der negativen Elektrode verbunden ist, und
der zweite Elektroden-Verbindungsabschnitt (133, 153, 163, 173) über die zweite Fläche (133a, 153a, 163a, 173a) mit der positiven Elektrode oder der negativen Elektrode verbunden ist.

8. Energiespeicherelement (10), das umfasst:
eine Elektrodenanordnung (120), die eine positive Elektrode und eine negative Elektrode aufweist;
einen positiven Elektrodenanschluss (200);
einen negativen Elektrodenanschluss (300); und
den Stromsammler (130, 140, 150, 160, 170) nach einem der Ansprüche 1 bis 7, der elektrische Verbindung zwischen der positiven Elektrode und dem positiven Elektrodenanschluss (200) oder/und zwischen der negativen Elektrode und dem negativen Elektrodenanschluss (300) herstellt.

9. Verfahren zum Herstellen eines Stromsammlers, wobei der Stromsammler einen ersten Anschluss-Verbindungsabschnitt; einen ersten Elektroden-Verbindungsabschnitt, der eine erste Fläche enthält, die sich von einem rechten vorderen Abschnitt des Anschluss-Verbindungsabschnitts nach vorn erstreckt, sowie einen zweiten Elektroden-Verbindungsabschnitt enthält, der eine zweite Fläche enthält, die sich von einem linken vorderen Abschnitt des Anschluss-Verbindungsabschnitts nach vorn erstreckt,
und wobei das Verfahren die folgenden Schritte umfasst:
Ausbilden eines ersten verdrehten Abschnitts, dessen einer Endabschnitt mit dem rechten vorderen Abschnitt verbunden ist und dessen anderer Endabschnitt mit einem oberen Endabschnitt des ersten Elektroden-Verbindungsabschnitts verbunden ist, durch Rotieren und Verdrehen des ersten Elektroden-Verbindungsabschnitts nach unten in Bezug auf den Anschluss-Verbindungsabschnitt, so dass sich die erste Fläche von dem rechten vorderen Abschnitt nach vorn und nach unten erstreckt; und
Ausbilden eines zweiten verdrehten Abschnitts, dessen einer Endabschnitt mit dem linken vorderen Abschnitt verbunden ist und dessen anderer Endabschnitt mit einem oberen Endabschnitt des zweiten Elektroden-Verbindungsabschnitts verbunden ist, durch Rotieren und Verdrehen des zweiten Elektroden-Verbindungsabschnitts nach unten in Bezug auf den Anschluss-Verbindungsabschnitt, so dass sich die zweite Fläche von dem linken vorderen Abschnitt nach vorn und nach unten erstreckt und der ersten Fläche gegenüberliegt,
**dadurch gekennzeichnet, dass**
der Schritt des Ausbildens des ersten verdrehten Abschnitts oder des Ausbildens des zweiten verdrehten Abschnitts einschließt, dass der erste Elektroden-Verbindungsabschnitt oder der zweite Elektroden-Verbindungsabschnitt so verdreht wird, dass ein Zwischenraum zwischen Flächen, d. h. ein Abstand zwischen der ersten Fläche und der zweiten Fläche in der Links-Rechts-Richtung, größer ist als ein Abstand zwischen der Mitte des rechten vorderen Abschnitts in der Links-Rechts-Richtung und der Mitte des linken vorderen Abschnitts in der Links-Rechts-Richtung.

10. Verfahren nach Anspruch 9,
wobei der Schritt des Ausbildens des ersten verdrehten Abschnitts oder des Ausbildens des zweiten verdrehten Abschnitts einschließt, dass der erste Elektroden-Verbindungsabschnitt oder der zweite Elektroden-Verbindungsabschnitt so verdreht wird, dass der Zwischenraum zwischen Flächen größer ist als ein Abstand zwischen der rechten Kante des rechten vorderen Abschnitts und der linken Kante des linken vorderen Abschnitts in der Links-Rechts-Richtung.

11. Verfahren nach Anspruch 9 oder 10,
wobei der Schritt des Ausbildens des ersten verdrehten Abschnitts oder des Ausbildens des zweiten verdrehten Abschnitts einschließt, dass der erste Elektroden-Verbindungsabschnitt oder der zweite Elektroden-Verbindungsabschnitt so verdreht wird, dass der Zwischenraum zwischen Flächen einem Abstand zwischen einem oberen Endabschnitt der ersten Fläche und einem oberen Endabschnitt der zweiten Fläche in der Links-Rechts-Richtung gleich ist.

12. Verfahren nach Anspruch 9 oder 10,
wobei der Schritt des Ausbildens des ersten verdrehten Abschnitts oder des Ausbildens des zweiten verdrehten Abschnitts einschließt, dass der erste Elektroden-Verbindungsabschnitt oder der zweite Elektroden-Verbindungsabschnitt so verdreht wird, dass der Zwischenraum zwischen Flächen einem minimalen Wert des Abstandes zwischen der ersten Fläche und der zweiten Fläche in der Links-Rechts-Richtung gleich ist.

## Revendications

1. Collecteur de courant (130, 140, 150, 160, 170) comprenant :
une partie de connexion de borne (131, 151, 161, 171) ;
une première partie de connexion d'électrode (132, 152, 162, 172) comprenant une première surface (132a, 152a, 162a, 172a) qui s'étend vers l'avant et vers le bas depuis une partie frontale droite (131a, 151a, 161a, 171a) de la partie de connexion de borne (131, 151, 161, 171) ;
une deuxième partie de connexion d'électrode (133, 153, 163, 173) comprenant une deuxième surface (133a, 153a, 163a, 173a) qui s'étend vers l'avant et vers le bas depuis une partie frontale gauche (131b, 151b, 161b, 171b) de la partie de connexion de borne (131, 151, 161, 171) et faisant face à la première surface (132a, 152a, 162a, 172a) ;
une première partie vrillée (134, 154, 164, 174) comportant une partie d'extrémité connectée à la partie frontale droite (131a, 151a, 161a, 171a) et l'autre partie d'extrémité connectée à une partie d'extrémité supérieure (132b) de la première partie de connexion d'électrode (132, 152, 162, 172) ; et
une deuxième partie vrillée (135, 155, 165, 175) comportant une partie d'extrémité connectée à la partie frontale gauche (131b, 151b, 161b, 171b) et l'autre partie d'extrémité connectée à une partie d'extrémité supérieure (133b) de la deuxième partie de connexion d'électrode (133, 153, 163, 173),
**caractérisé**
**en ce qu'**un écartement entre les surfaces, défini comme une première distance (A) entre la première surface (132a, 152a, 162a, 172a) et la deuxième surface (133a, 153a, 163a, 173a) en direction gauche-droite, est supérieur à une deuxième distance (B) entre le centre de la partie frontale droite (131a, 151a, 161a, 171a) en direction gauche-droite et le centre de la partie frontale gauche (131b, 151b, 161b, 171b) en direction gauche-droite.

2. Collecteur de courant (130, 140, 150, 160, 170) selon la revendication 1,
dans lequel l'écartement entre les surfaces est supérieur à une troisième distance (C) entre le bord droit de la partie frontale droite (131a, 151a, 161a, 171a) et le bord gauche de la partie frontale gauche (131b, 151b, 161b, 171b) en direction gauche-droite.

3. Collecteur de courant (130, 140, 150, 160, 170) selon la revendication 1 ou 2,
dans lequel l'écartement entre les surfaces est défini comme étant une distance en direction gauche-droite entre une partie d'extrémité supérieure (162b, 172b) de la première surface (132a, 152a, 162a, 172a) et une partie d'extrémité supérieure (163b, 173b) de la deuxième surface (133a, 153a, 163a, 173a).

4. Collecteur de courant (130, 140, 150, 160, 170) selon la revendication 1 ou 2,
dans lequel l'écartement entre les surfaces est défini comme étant une valeur minimale de la distance entre la première surface (132a, 152a, 162a, 172a) et la deuxième surface (133a, 153a, 163a, 173a) en direction gauche-droite.

5. Collecteur de courant (130, 140, 150, 160, 170) selon l'une quelconque des revendications 1 à 4,
dans lequel une longueur de la partie frontale droite (131a, 151a, 161a, 171a) en direction gauche-droite est généralement identique à une longueur de la partie d'extrémité supérieure (132b) de la première partie de connexion d'électrode (132, 152, 162, 172) en direction avant-arrière, ou dans lequel une longueur de la partie frontale gauche (131b, 151b, 161b, 171b) en direction gauche-droite est généralement identique à une longueur de la partie d'extrémité supérieure (133b) de la deuxième partie de connexion d'électrode (133, 153, 163, 173) en direction avant-arrière.

6. Collecteur de courant (130, 140, 150, 160, 170) selon l'une quelconque des revendications 1 à 5,
dans lequel la première partie vrillée (134, 154, 164, 174) présente une forme réalisée en vrillant une plaque plane en une pluralité d'étapes, et constitue une partie intermédiaire entre la partie frontale droite (131a, 151a, 161a, 171a) et la partie d'extrémité supérieure (132b) de la première partie de connexion d'électrode (132, 152, 162, 172), ou la deuxième partie vrillée (135, 155, 165, 175) présente une forme réalisée en vrillant une plaque plane en une pluralité d'étapes, et constitue une partie intermédiaire entre la partie frontale gauche (131b, 151b, 161b, 171b) et la partie d'extrémité supérieure (133b) de la deuxième partie de connexion d'électrode (133, 153, 163, 173).

7. Collecteur de courant (130, 140, 150, 160, 170) selon l'une quelconque des revendications 1 à 6, le collecteur de courant (130, 140, 150, 160, 170) étant agencé dans un élément de stockage d'énergie (10) comprenant (i) un ensemble d'électrode (120) comportant une électrode positive et une électrode négative, et (ii) une borne d'électrode positive (200) et une borne d'électrode négative (300) situées au-dessus de l'ensemble d'électrode (120),
dans lequel la partie de connexion de borne (131, 151, 161, 171) est située sur le côté de la borne d'électrode positive (200) ou de la borne d'électrode négative (300), et est connectée électriquement à la borne d'électrode positive (200) ou à la borne d'électrode négative (300),
la première partie de connexion d'électrode (132, 152, 162, 172) est connectée à l'électrode positive ou à l'électrode négative via la première surface (132a, 152a, 162a, 172a), et
la deuxième partie de connexion d'électrode (133, 153, 163, 173) est connectée à l'électrode positive ou à l'électrode négative via la deuxième surface (133a, 153a, 163a, 173a).

8. Élément de stockage d'énergie (10) comprenant :
un ensemble d'électrode (120) comportant une électrode positive et une électrode négative ;
une borne d'électrode positive (200) ;
une borne d'électrode négative (300) ; et
le collecteur de courant (130, 140, 150, 160, 170) selon l'une quelconque des revendications 1 à 7, qui connecte électriquement au moins un élément parmi l'électrode positive et la borne d'électrode positive (200) à au moins un élément parmi l'électrode négative et la borne d'électrode négative (300).

9. Procédé de fabrication d'un collecteur de courant, dans lequel le collecteur de courant comprend une partie de connexion de borne ; une première partie de connexion d'électrode comprenant une première surface qui s'étend vers l'avant depuis une partie frontale droite de la partie de connexion de borne ; et une deuxième partie de connexion d'électrode comprenant une deuxième surface qui s'étend vers l'avant depuis une partie frontale gauche de la partie de connexion de borne,
et dans lequel le procédé comprend les étapes suivantes :
formation d'une première partie vrillée comportant une partie d'extrémité connectée à la partie frontale droite et l'autre partie d'extrémité connectée à une partie d'extrémité supérieure de la première partie de connexion d'électrode, en tournant et en vrillant la première partie de connexion d'électrode vers le bas par rapport à la partie de connexion de borne de telle sorte que la première surface s'étend vers l'avant et vers le bas à partir de la partie frontale droite ; et
formation d'une deuxième partie vrillée comportant une partie d'extrémité connectée à la partie frontale gauche et l'autre partie d'extrémité connectée à une partie d'extrémité supérieure de la deuxième partie de connexion d'électrode, en tournant et en vrillant la deuxième partie de connexion d'électrode vers le bas par rapport à la partie de connexion de borne de telle sorte que la deuxième surface s'étend vers l'avant et vers le bas à partir de la partie frontale gauche de manière à être opposée à la première surface,
**caractérisé**
**en ce que** l'étape de formation de la première partie vrillée ou de formation de la deuxième partie vrillée comprend le vrillage de la première partie de connexion d'électrode ou le vrillage de la deuxième partie de connexion d'électrode de telle sorte qu'un écartement entre les surfaces, défini comme une distance entre la première surface et la deuxième surface en direction gauche-droite, devient supérieur à une distance entre le centre de la partie frontale droite en direction gauche-droite et le centre de la partie frontale gauche en direction gauche-droite.

10. Procédé selon la revendication 9,
dans lequel l'étape de formation de la première partie vrillée ou de formation de la deuxième partie vrillée comprend le vrillage de la première partie de connexion d'électrode ou le vrillage de la deuxième partie de connexion d'électrode de telle sorte que l'écartement entre les surfaces devient supérieur à une distance entre le bord droit de la partie frontale droite et le bord gauche de la partie frontale gauche en direction gauche-droite.

11. Procédé selon la revendication 9 ou 10,
dans lequel l'étape de formation de la première partie vrillée ou de formation de la deuxième partie vrillée comprend le vrillage de la première partie de connexion d'électrode ou le vrillage de la deuxième partie de connexion d'électrode de telle sorte que l'écartement entre les surfaces devient égal à une distance entre une partie d'extrémité supérieure de la première surface et une partie d'extrémité supérieure de la deuxième surface en direction gauche-droite.

12. Procédé selon la revendication 9 ou 10,
dans lequel l'étape de formation de la première partie vrillée ou de formation de la deuxième partie vrillée comprend le vrillage de la première partie de connexion d'électrode ou le vrillage de la deuxième partie de connexion d'électrode de telle sorte que l'écartement entre les surfaces devient égal à une valeur minimale de la distance entre la première surface et la deuxième surface en direction gauche-droite.
